Europäisches Patentamt

European Patent Office

Office européen des brevets

(11) Numéro de publication : **0 383 667 B1**

# (12) FASCICULE DE BREVET EUROPEEN

(45) Date de publication du fascicule du brevet :
**30.09.92 Bulletin 92/40**

(51) Int. Cl.$^5$ : **B29C 67/14,** B29C 35/02

(21) Numéro de dépôt : **90400377.9**

(22) Date de dépôt : **13.02.90**

(54) Procédé d'élaboration d'une atmosphère pour la fabrication d'éléments composites à haute performance.

(30) Priorité : **14.02.89 FR 8901867**

(43) Date de publication de la demande :
**22.08.90 Bulletin 90/34**

(45) Mention de la délivrance du brevet :
**30.09.92 Bulletin 92/40**

(84) Etats contractants désignés :
**AT BE CH DE ES FR GB GR IT LI LU NL SE**

(56) Documents cités :
**EP-A- 0 099 211**
**GB-A- 2 073 043**
**COMPOSITES, vol. 19, no. 1, janvier 1988,**
**pages 37-47; P.J. MALLON et al.:**
**"Development of a pilot autoclave for polyme-**
**ricdiaphragm forming of continuous fibre-**
**reinforced thermoplastics"**
**COMPOSITES, vol. 23, no. 3, mai-juin 1983,**
**pages 5-9; G. KEIL et al.: "Préimprégnés ther-**
**modurcissables: les équipementsnécessaires**
**à leur mise en oeuvre"**

(73) Titulaire : **L'AIR LIQUIDE, SOCIETE ANONYME**
**POUR L'ETUDE ET L'EXPLOITATION DES**
**PROCEDES GEORGES CLAUDE**
**75, Quai d'Orsay**
**F-75321 Paris Cédex 07 (FR)**

(72) Inventeur : **Bonet, Claude**
**3, rue Bargue**
**F-75015 Paris (FR)**
Inventeur : **Barbier, François-Xavier**
**119, Minneola Street**
**Hinsdale, Illinois, 50521 (US)**

(74) Mandataire : **Le Moenner, Gabriel et al**
**L'AIR LIQUIDE, Société Anonyme pour l'étude**
**et l'exploitation des procédés Georges Claude**
**75, Quai d'Orsay**
**F-75321 Paris Cédex 07 (FR)**

## Description

La présente invention concerne l'élaboration d'une atmosphère sous pression pour la fabrication de pièces composites dites à haute performance, du genre où ladite atmosphère est utilisée en autoclave au-dessus d'une superposition de découpes de tissu à structure fibreuse imprégnée d'une matière organique thermodurcissable placées entre un moule inférieur et une bâche d'étanchéité supérieure, de préférence avec mise sous vide de l'espace entre bâche et moule.

En pratique, ces structures fibreuses élémentaires en forme de découpes de tissu pré-imprégné sont réalisées à partir de fibres de renforcement en carbone graphite, aramide, verre, tandis que les matières organiques thermodurcissables sont des résines époxy, polyester, phénolique, vinylester, polyimide.

Le moulage est effectué à l'autoclave sous température relativement élevée, de l'ordre de 150°C à 350°C et sous pression de l'ordre de 5 bars à 20 bars selon la nature de la matière organique mise en oeuvre, le vide environnant la structure en course de moulage étant un vide primaire, afin d'éliminer, avec le concours de la pression exercée au-dessus de la bâche, toute bulle gazeuse résiduelle dans ladite structure, et toute présence résiduelle de solvant organique.

A titre d'atmosphère de mise sous pression qui sert également au transfert thermique, on utilise couramment de l'air, car dans les conditions de pression et de température, il n'y a pas de risque d'inflammation spontanée de la matière organique, ni de propagation de flamme. Malgré cette relative sécurité, on a constaté certains accidents qui conduisent à une inflammation et l'analyse qui en a été faite a démontré qu'il existait toujours une cause non directement liée à la structure en cours de moulage. Ce peut être un court-circuit dans l'installation électrique annexe, ou un défaut dans le séchage préalable des solvants de la matière organique, et l'inflammation peut intéresser au départ certains accessoires de fabrication tels la bâche, le tissue et tapis d'imprégnation, le mastic d'étanchéité, etc...

Aussi longtemps que ce procédé de moulage dit à l'autoclave sous bâche à vide intéressait de petites pièces, de tels accidents pouvaient être circonscrits sans trop de dommages, tant au point de vue matériel qu'humain.

Cependant, cette technique a récemment pris de l'ampleur en ce sens que des pièces de dimensions de plus en plus grandes sont actuellement fabriquées selon ce procédé et il n'est pas rare de mettre en oeuvre des autoclaves ayant des capacités de plusieurs centaines de mètres cubes. Et ce développement dimensionnel s'accompagne également d'exigences accrues en productivité de tels équipements lourds et des autoclaves. D'autre part, certaines résines utilisés maintenant de façon courante, telles les polyimides et notamment celle connue sous la désignation commerciale de PMR 15, exigent des conditions de pression et de température plus élevées, ce qui présente donc un risque accru. De plus, et à juste titre bien entendu, la réglementation de la sécurité vise des normes de plus en plus exigentes en ce qui concerne le personnel.

C'est la raison pour laquelle on a proposé de substituer de l'azote inerte à l'air pour l'atmosphère de l'autoclave, mais cela représente un accroîssement significatif de l'investissement (stockage d'azote liquide et évaporateur, étant données les grandes quantités de gaz inerte à mettre en oeuvre dans des autoclaves de plus en plus volumineux sous des pressions de plus en plus élevées) et du coût d'utilisation (car l'azote liquide de distillation cryogénique est relativement onéreux). Aussi, dans un but de compromis entre le coût et la sécurité, on a mis en oeuvre une solution mixte où l'on mélange de l'air et de l'azote cryogénique, de façon à rester cependant largement en dessous de la valeur théorique admissible de la teneur en oxygène, mais cette solution s'avère encore onéreuse, et peu pratique à mettre en oeuvre à cause des impératifs inhérents aux techniques de mélange de gaz.

La demanderesse a procédé à une étude approfondie sous l'aspect de la sécurité de la composition des atmosphères pouvant être mises en jeu dans ce type de technique. On est ainsi parti d'une teneur maximale en oxygène (dite indice d'oxygène IO) qui évite la propagation d'une flamme après inflammation locale sur un produit mis en contact avec ladite atmosphère et si la teneur réelle en oxygène est inférieure à IO, alors l'atmosphère est qualifiée d'atmosphère de sécurité pour le produit en question. La méthode utilisée a été de déterminer l'indice d'oxygène IO à une température To de 25°C et une pression Po de 1 bar et de procéder à une extrapolation par calcul correctif pour des pressions et températures plus élevées (à noter que la correction de pression est en fait tout à fait négligeable). Et l'on est parti de cette constatation expérimentale que quel que soit le type de polymère, l'indice d'oxygène IO est à 25°C sous 1 bar, toujours supérieur à 0,15. Le résultat de cette étude est rappelé ci-dessous :

| T | Io (1 bar) | Io (30 bars) |
|---|---|---|
| 25°C | 0,15 | |
| 100°C | 0,107 | 0,101 |
| 150°C | 0,088 | 0,084 |
| 180°C | 0,080 | 0,075 |
| 230°C | 0,068 | 0,064 |
| 315°C | 0,054 | 0,051 |
| 450°C | 0,039 | 0,0377 |

On constate, à la lecture de ces résultats que dans le cas de résines époxy chauffées à une température de 180°C, l'indice d'oxygène Io est de 0,080 (1 bar), 0,075 (30 bars), alors qu'il monte à 0,054 (1 bar), 0,051 (30 bars) à une température de 315°C, qui est celle mise en oeuvre avec les polyimides.

Ces chiffres sont à comparer avec les indices d'oxygène mesurés dans une atmosphère en contact avec différents matériaux des organes accessoires susceptibles d'intervenir dans une opération de moulage en autoclave sous bâche à vide. Comme précédemment, cet indice d'oxygène correspond à la teneur minimale en oxygène dans un mélange oxygène-azote à la pression atmosphérique à partir de laquelle une propagation de la combustion du matériau intervient naturellement :

– opération de moulage à une température de l'ordre de 120°C à 180°C (polymérisation de résines époxy).

| | Réf. TYGAVAC | Io |
|---|---|---|
| Bâche à vide | NBF 205C | 0,43 |
| | 50 μ | |
| Film démoulant | RF 260 | 0,90 |
| | 25 μ | |
| Tapis de drainage | NW 339HA | 0,24 |
| Tissu à délaminer | 80 A/R | 0,19 |
| Film démoulant | RF 239 | 0,27 |

– opération de moulage à une température de l'ordre de 300°C. (polymérisation des polyimides/PMR 15)

| | Réf. TYGAVAC | Io |
|---|---|---|
| Bâche à vide | PBF 400 | 0,39 |
| | 50 μ | |
| Film démoulant | RF 305 | 0,99 |
| | 25 μ | |
| Tapis de drainage | NW 450HU | 0,82 |
| Tissu à délaminer | 300 C/R | 1 |
| Mastic d'étanchéité | VBS 600 | 0,20 |

La demanderesse a alors pris en compte un marge de sécurité en proposant de limiter la teneur en oxygène

3

à 80 % de l'indice d'oxygène Io et est alors parvenue à cette conclusion qu'une atmosphère en présence d'une résine époxy à 180°C devait avoir une teneur en oxygène inférieure à 0,06 (6 % d'oxygène), une atmosphère en présence de résine phénolique à 230°C une teneur en oxygène inférieure à 0,45 (4,5 % d'oxygène) et une atmosphère de résine polyimide à une température de 310°C une teneur en oxygène inférieure à 0,40 (teneur en oxygène inférieure à 4 %).

Une fois ces résultats confirmés par l'expérience, la demanderesse s'est posée le problème de résoudre l'ensemble de ces conditions opératoires de sécurité par des moyens les moins onéreux possible. Sous cet aspect, il convient de noter que le problème posé comportait à priori l'exigence de trouver une source de gaz, dont le prix de fabrication était nettement plus faible que l'azote de distillation cryogénique, susceptible, de façon simple et sans nécessiter des moyens coûteux de passer d'une atmosphère de sécurité pour un type de résine à une autre atmosphère de sécurité pour un autre type de résine, plusieurs résines thermodurcissables avec des propriétés d'inflammation différentes devant pouvoir être mises en oeuvre successivement dans une même installation de traitement. Une solution, bien entendu, aurait été de choisir l'atmosphère de sécurité pour la résine la plus inflammable (c'est-à-dire comme on l'a vu une résine polyimide), mais cela aurait conduit à des coûts de traitement tout à fait inadmissibles pour les autres résines moins inflammables.

Partant de ces considérations, la demanderesse est parvenue à la présente invention, selon laquelle on prépare un gaz d'atmosphère de sécurité à partir d'azote brut de séparation d'air par perméation ou adsorption à teneur résiduelle en oxygène réglable entre 0,1 % et 15 % et de préférence entre 0,1 % et 6 %, la teneur en vapeur d'eau pouvant atteindre 10 ppm.

C'est donc le mérite de la présente invention d'avoir déterminé, pour chaque type de résine utilisé, les indices d'oxygène correspondant aux limites inflammatoires et d'avoir sélectionné, parmi les possibilités qui s'offrent de réaliser de telles atmosphères de sécurité, les deux seules qui permettent à la fois de générer à frais réduits de l'azote brut de séparation d'air à teneur résiduelle inférieure à 6 % tout en permettant, par des moyens particulièrement simples, un abaissement réglable de cette teneur résiduelle à des valeurs inférieures à 6 %, pouvant aller jusqu'à 0,1 %. En effet, la simplicité du réglage permet une utilisation d'un perméateur ou d'un adsorbeur sans aucun problème particulier, puisqu'il convient seulement de limiter le débit de production en maintenant le même débit d'air admis, et cela, à des conditions de coût de production tout à fait admissibles, tout en admettant, pour des raisons de rentabilité d'exploitation, une teneur en oxygène résiduel qui s'approche de la limite maximale autorisée. Mais un tel réglage optimal doit impérativement se faire cas par cas, car il faut reconnaître que la réduction de la teneur en oxygène résiduel (entre 6 % et 0,1 %) s'effectue au détriment du taux d'extraction donc avec accroîssement du coût de production et l'on note à ce sujet que le taux d'extraction (volume de production d'azote brut par unité de volume d'air admis) chute considérablement avec la baisse de la teneur en oxygène. C'est donc un avantage décisif de pouvoir disposer, pour un autoclave donné, ou une batterie d'autoclaves en parallèle, une seule unité de génération d'azote brut destiné à former l'atmosphère de sécurité, que l'on peut utiliser, sans difficulté aucune, successivement et après réglage, pour le moulage d'éléments imprégnés de résines différents.

Cette façon de faire présente les avantages d'éviter en principe tout inflammation des matériaux placés dans l'autoclave et en cas d'amorce accidentelle d'une inflammation de provenance externe, les matériaux sont autoextinginbles, car la vitesse de propagation de la flamme est alors nulle. Outre le fait déjà mentionné du réglage optimal de la teneur en oxygène, il faut mentionner que ce procédé selon l'invention met en oeuvre une atmosphère inerte, donc non dangereuse.

L'invention a également pour objet une installation d'élaboration d'une atmosphère pour la fabrication de pièces composites à haute performance, du genre où ladite atmosphère est utilisée en autoclave au-dessus d'une superposition de découpes de tissu à structure fibreuse imprégnée d'une matière organique thermodurcissable placées dans un autoclave entre un moule inférieur et une bâche d'étanchéité supérieure, avec des moyens de mise sous vide de l'espace entre bâche et moule, et des moyens d'injection d'un gaz substantiellement inerte sous pression, qui se caractérise en ce qu'elle comporte un compresseur d'air d'alimentation d'un générateur d'azote brut par séparation d'air, du type adsorbeur ou perméateur, un moyen de réglage de la pression aval dudit générateur, un second compresseur ou surpresseur et un réservoir tampon destiné à être raccordé audit autoclave.

A titre d'exemples, on a testé les atmosphères suivantes :
– cas d'une résine époxy : on a utilisée de l'azote avec une teneur résiduelle en oxygène de 3 %, 4 %, 5 % et 6 % et une amorce d'allumage n'a été suivie d'aucune suite ;
– cas d'une résine polyimide : on a utilisé de l'azote avec une teneur résiduelle en oxygène de 0,5 %, 1 %, 2 % et 4 % avec les mêmes résultats satisfaisants.

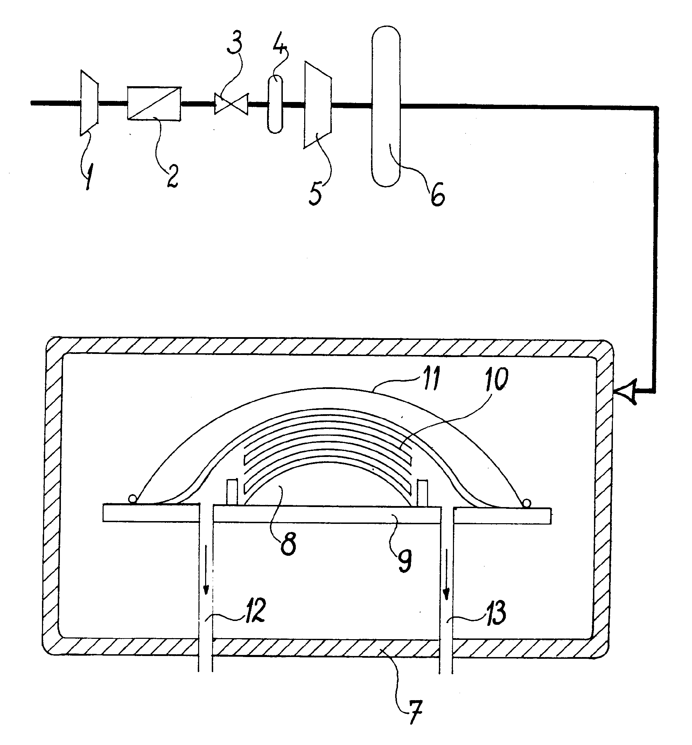

Une installation selon l'invention adaptée à une installation déjà existante fonctionnant sous pression d'air est décrite dans le dessin schématique annexé, où l'on voit qu'un compresseur d'air 1 alimente un générateur à membrane ou un adsorbeur 2, suivi d'une valve de détente 3. L'azote brut produit à pression de l'ordre de 8 bars passe dans un petit réservoir-tampon 4 et est ensuite dirigé vers un compresseur 5 d'alimentation d'un réservoir tampon principal 6, à partir duquel est prélevé l'azote brut de sécurité pour un autoclave 7.

Dans l'autoclave 7 on a enfourné sur un moule inférieur 8 placé sur un support 9 une superposition de découpes de tissue à structure préimprégnés de résine 10, au-dessus desquelles on a placé une bâche 11 fixée à sa périphérie de façon étanche par l'intermédiaire de joints à mastic, de façon à assurer, via les conduits 12 et 13, un vide primaire par des pompes non représentées.

En variante, dans le cas d'une nouvelle installation d'autoclave, il est alors inutile de détendre le gaz à la sortie de l'adsorbeur ou perméateur et il suffit de reprendre ce gaz de production sous pression par un surpresseur à la place d'un simple compresseur.

L'invention s'applique au domaine de la fabrication de pièces composites dites à haute performance qui concerne des structures secondaires et même des structures primaires en construction aéronautique et spatiale telles les voilures, les fuselages, les empennages, les bords d'attaque d'ailes, les caissons de voilure, les ailerons. En outre, elle peut s'appliquer à la fabrication de circuits imprimés multicouches présentant des pistes induites en feuille de cuivre ou des inducteurs en cuivre formés par sérigraphie.

## Revendications

1. Procédé d'élaboration d'une atmosphère pour la fabrication de pièces composites à haute performance, du genre où ladite atmosphère est utilisée en autoclave au-dessus d'une superposition de découpes à structure fibreuse tissée imprégnée d'une matière organique thermodurcissable placée entre un moule inférieur et une bâche d'étanchéité supérieure, de préférence avec mise sous vide de l'espace entre bâche et moule, ladite atmosphère étant réalisée à partir d'un gaz inerte tel l'azote, caractérisé en ce qu'on utilise, à titre de gaz azote d'atmosphère de sécurité, de l'azote brut de séparation d'air par perméation ou adsorption à une teneur résiduelle en oxygène réglable entre 0,1 % et 15 %, de préférence entre 0,1 et 6 %, la teneur en vapeur d'eau pouvant atteindre 10 ppm.

2. Procédé d'élaboration d'une atmosphère pour la fabrication de pièces composites à haute performance, selon la revendication 1, caractérisé en ce qu'on utilise, à titre de matière organique thermodurcissable, une résine époxy portée à une température de l'ordre de 120°C à 180°C sous une pression de l'ordre de 8 bars et en ce qu'on règle les conditions de production de l'azote de perméation ou adsorption de façon que le teneur en oxygène résiduelle soit comprise entre 3 % et 6 %.

3. Procédé d'élaboration d'une atmosphère pour la fabrication de pièces composites à haute performance, selon la revendication 1, caractérisé en ce qu'on utilise, à titre de matière organique thermodurcissable, une résine polyimide portée à une température de l'ordre de 300°C sous pression supérieure à 8 bars et en ce qu'on règle les conditions de production de l'azote de perméation ou adsorption de façon que la teneur en oxygène résiduelle soit comprise entre 0,5 % et 4 %.

4. Procédé d'élaboration d'une atmosphère pour la fabrication de pièces composites à haute performance, selon la revendication 1, caractérisé en ce qu'on utilise, à titre de matière organique thermodurcissable, une résine phénolique portée à une température de l'ordre de 230°C sous pression de l'ordre de 8 bars et en ce qu'on règle les conditions de production de l'azote de perméation ou adsorption de façon que la teneur en oxygène résiduelle soit comprise entre 3 % et 5 %.

5. Installation d'élaboration d'une atmosphère pour la fabrication de pièces composites à haute performance, du genre où ladite atmosphère est utilisée en autoclave au-dessus d'une superposition de découpes à structure fibreuse imprégnée d'une matière organique thermodurcissable placés dans un autoclave entre un moule inférieur et une bâche d'étanchéité supérieure, avec des moyens de mise sous vide de l'espace entre bâche et moule, et des moyens d'injection d'un gaz substantiellement inerte sous pression au-dessus de ladite bâche, caractérisée en ce qu'elle comporte un compresseur d'air d'alimentation d'un générateur d'azote brut de séparation d'air du type adsorbeur ou perméateur, un moyen de réglage de la teneur en oxygène résiduel dudit générateur, un second compresseur ou surpresseur du gaz de production et un réservoir tampon destiné à être raccordé audit autoclave.

EP 0 383 667 B1

## Patentansprüche

1. Verfahren zur Bereitung einer Atmosphäre für die Herstellung von Hochleistungsverbundwerkstoffelementen, bei der diese Atmosphäre in einem Autoklaven über einer Schichtung von Abschnitten mit gewebter, mit einem hitzehärtbaren organischen Material Imprägnierten Faserstruktur, die zwischen einer unteren Form und einer oberen Abdichtungsdecke angeordnet ist, benutzt wird, wobei vorzugsweise der Raum zwischen der Decke und der Form unter Vakuum steht und wobei die genannte Atmosphäre von einem Inertgas, wie Stickstoff, gebildet wird, dadurch gekennzeichnet, daß man als Stickstoffgas der Sicherheitsatmosphäre Rohstickstoff einer Lufttrennung durch Permeation oder Adsorption mit einem zwischen 0,1 % und 15 %, vorzugsweise zwischen 0,1 und 6 %, einstellbaren Restsauerstoffgehalt verwendet, wobei der Wasserdampfgehalt 10 ppm erreichen kann.

2. Verfahren zur Bereitung einer Atmosphäre für die Herstellung von Hochleistungsverbundwerkstoffelementen nach Anspruch 1, dadurch gekennzeichnet, daß man als hitzehärtbares organisches Material ein auf eine Temperatur in der Größenordnung von 120°C bis 180°C unter einem Druck in der Größenordnung von 8 bar gebrachtes Epoxyharz verwendet und daß man die Herstellungsbedingungen des Permeations- oder Adsorptionsstickstoffes derart einstellt, daß der Sauerstoffrestgehalt zwischen 3 % und 6 % liegt.

3. Verfahren zur Bereitung einer Atmosphäre für die Herstellung von Hochleistungsverbundwerkstoffelementen nach Anspruch 1, dadurch gekennzeichnet, daß man als hitzehärtbares organisches Material ein auf eine Temperatur in der Größenordnung von 300°C unter einem Druck über 8 bar gebrachtes Polyimidharz verwendet und daß man die Herstellungsbedingungen des Permeations- oder Adsorptionsstickstoffes derart einstellt, daß der Sauerstoffrestgehalt zwischen 0,5 % und 4 % liegt.

4. Verfahren zur Bereitung einer Atmosphäre für die Herstellung von Hochleistungsverbundwerkstoffelementen nach Anspruch 1, dadurch gekennzeichnet, daß man als hitzehärtbares organisches Material ein auf eine Temperatur in der Größenordnung von 230°C unter einem Druck in der Größenordnung von 8 bar gebrachtes Phenolharz verwendet und daß man die Herstellungsbedingungen des Permeations- oder Adsorptionsstickstoffes derart einstellt, daß der Restsauerstoffgehalt zwischen 3 % und 5 % liegt.

5. Vorrichtung zur Bereitung einer Atmosphäre für die Herstellung von Hochleistungsverbundwerkstoffelementen, bei der diese Atmosphäre in einem Autoklaven über einer Schichtung von Abschnitten einer mit einem hitzehärtbaren organischen Material imprägnierten Faserstruktur, die in einem Autoklaven zwischen einer unteren Form und einer oberen Abdichtungsdecke benutzt wird, mit Einrichtungen, um den Raum zwischen der Decke und der Form unter Vakuum zu halten, und Einrichtungen zum Einblasen eines im wesentlichen inerten Gases unter Druck oberhalb der Decke, dadurch gekennzeichnet, daß sie einen Beschickungsluftkompressor eines Generators für Rohstickstoff einer Lufttrennung vom Adsorber- oder Permeatortyp, eine Einrichtung zur Einstellung des Restsauerstoffgehaltes dieses Generators, einen zweiten Kompressör oder Nachverdichter für Produktionsgas und einen für die Verbindung mit dem Autoklaven bestimmten Pufferbehälter aufweist.

## Claims

1. Process for the production of an atmosphere for the manufacture of high-performance composite parts, of the type in which the said atmosphere is used in an autoclave above superposed cut-out parts having a woven fibrous structure impregnated with a thermohardening organic material and placed between a lower mould and an upper sealing cover, preferably with pressurization of the space between the cover and the mould, the said atmosphere being produced from an inert gas such as nitrogen, characterised in that there is used, by way of a safety atmosphere nitrogen gas, raw nitrogen from air separation by permeation or adsorption having a residual content of oxygen which can be adjusted between 0.1% and 15%, preferably between 0.1 and 6%, the water vapour content being capable of reaching 10 ppm.

2. Process for the production of an atmosphere for the manufacture of high-performance composite parts, according to claim 1, characterised in that, by way of a thermohardening organic material, an epoxy resin is used which is brought to a temperature of the order of 120°C to 180°C under a pressure of the order of 8 bars, and in that the conditions of production of the permeation or adsorption nitrogen are controlled so that the residual oxygen content is between 3% and 6%.

3. Process for the production of an atmosphere for the manufacture of high-performance composite parts, according to claim 1, characterised in that, by way of a thermohardening organic material, a polyimide resin is used which is brought to a temperature of the order of 300°C under a pressure of greater than 8 bars, and in that the conditions of production of the permeation or adsorption nitrogen are controlled so that the residual oxygen content is between 0.5% and 4%.

4. Process for the production of an atmosphere for the manufacture of high-performance composite parts, according to claim 1, characterised in that, by way of a thermohardening organic material, a phenolic resin is used which is brought to a temperature of the order of 230°C under a pressure of the order of 8 bars, and in that the conditions of production of the permeation or adsorption nitrogen are controlled so that the residual oxygen content is between 3% and 5%.

5. Arrangement for the production of an atmosphere for the manufacture of high-performance composite parts, of the type in which the said atmosphere is used in an autoclave above superposed cut-out parts having a fibrous structure impregnated with a thermohardening organic material and placed in an autoclave between a lower mould and an upper sealing cover, with pressurization means for the space between the cover and the mould, and means for injecting a substantially inert gas under a pressure above that of the said cover, characterised in that it comprises an air compressor, of the adsorber or permeator type, for supplying a generator of raw nitrogen for air separation, a means for adjusting the residual oxygen content of the said generator, a second compressor or supercharger for the production gas and a buffer reservoir for connection to the said autoclave.